# EUROPÄISCHE PATENTSCHRIFT

(11) **EP 0 931 491 B1**
(45) Veröffentlichungstag und Bekanntmachung des Hinweises auf die Patenterteilung: **20.08.2003**
(21) Anmeldenummer: 99810026.7
(22) Anmeldetag: 15.01.1999
(51) Int. Cl.: A47J 31/40

(54) **Kaffeemaschine**
Coffee machine
Machine à café

(30) Priorität: 26.01.1998 CH 17098
(43) Veröffentlichungstag der Anmeldung: 28.07.1999
(73) Patentinhaber: Fianara International B.V., 1079 LH Amsterdam (NL)
(72) Erfinder: Schmed, Arthur, 8635 Oberdürnten (CH)
(74) Vertreter: Rottmann, Maximilian R.

(56) Entgegenhaltungen:
- EP-A- 0 559 620
- EP-A- 0 659 377
- US-A- 5 316 781

## Beschreibung

Die Erfindung betrifft eine Kaffeemaschine nach dem Oberbegriff des Anspruchs 1.

Bei Kaffeemaschinen der hier zur Rede stehenden Art wird ein Kaffeegetränk zubereitet, indem einer Brühkammer Kaffeepulver zudosiert, dieses von einem beweglichen Kolben verdichtet und anschliessend vom Brühwasser unter hohem Druck durchströmt wird. Zum Verschliessen der Brühkammer ist auf der einen Seite des Brühzylinders ein, üblicherweise feststehender, Verschlusskolben angeordnet, gegenüber welchem der Brühzylinder bewegbar ist. Der zum Verdichten des Kaffeepulvers vorgesehene Kolben ist im Brühzylinder aufgenommen und wird nebst dem Verdichten des Kaffeepulvers auch dazu verwendet, den ausgelaugten Kaffeekuchen aus dem Brühzylinder auszustossen. Zum Erhitzen des Brühwassers ist ein Heisswasserbereiter vorgesehen, der das Brühwasser über eine Verbindungsleitung dem einen der beiden Kolben zuführt, von wo es über eine am Kolben angeordnete Siebplatte in den Brühraum gelangt und das Kaffeepulver gleichmässig durchströmt.

Aus der EP 0 559 620 ist eine gattungsgemässe Kaffeemaschine bekannt, bei welcher ein Einschubmodul vorgesehen, das im wesentlichen aus einem Brühkolben genannten Verschlusskolben, einem Brühzylinder, einem Ausstosskolben sowie Zuführorganen zum Zuführen des Brühwassers zum Brühzylinder besteht. Der in der Ausgangsstellung vom Brühzylinder beabstandete Verschlusskolben ist an Führungs- und Halteplatten befestigt. Bei dieser Kaffeemaschine wird der Verschlusskolben über die Führungs- und Halteplatten relativ zum Brühzylinder bewegt, damit dieser endseitig verschlossen werden kann. Um dem Brühzylinder Kaffeepulver zudosieren zu können, ist ein Schwenkmechanismus vorgesehen, mittels welchem der Brühzylinder von der Einfüll- in die Brühstellung verschwenkt werden kann. Nebst dem eigentlichen Schwenkmechanismus sind weitere Antriebsmittel, Steuerlemente und Antriebsorgane zum Bewegen des Verschlusskolbens und zum Verschwenken des Brühzylinders vorgesehen. Dabei weist das Antriebsorgan eine Vielzahl von Ritzeln auf, welche einerseits in Verzahnungen auf der Innenseite von Antriebsarmen des Brühzylinders eingreifen und ausserdem mit einer am Ausstosskolben angeordneten Zahnstange zahnen. Eine derartig ausgestaltete Brüheinrichtung beansprucht viel Platz in der Höhe und in der Breite, da massive Führungs- und Halteplatten zum Abstützen und Bewegen des Verschlusskolbens vorgesehen werden müssen. Ausserdem weist das Einschubmodul eine grosse Bauhöhe auf. Zudem wird durch die Führungs- und Halteplatten sowie durch verschiedene Antriebsmittel die Zugänglichkeit beim Reinigen des Brühzylinders und des Brühkolbens erschwert. Ausserdem ist der Antriebs- und Schwenkmechanismus sehr aufwendig gestaltet, was sich wiederum negativ auf die Baugrösse des Einschubmoduls auswirkt und die Brüheinrichtung teuer in der Herstellung macht. Schliesslich muss am Einschubmodul bzw. am korrespondierenden Teil des Gehäuses eine auftrennbare Kupplung für das Brühwasser vorgesehen werden, welche mit dem Herausnehmen des Einschubmoduls aufgetrennt wird. Da das Brühwasser zum Aufbrühen des in der Brühkammer aufgenommenen Kaffeepulvers üblicherweise einen Druck zwischen 10 und 15 bar aufweist, muss die Kupplung entsprechend aufwendig gestaltet sein.

Es ist daher die Aufgabe der Erfindung, eine Kaffeemaschine der im Oberbegriff des Anspruchs 1 genannten Art vorzuschlagen, welche einfach und kompakt aufgebaut ist und bei der die einer Verschmutzung durch das aufgebrühte Kaffeegetränk unterliegenden Teile einfach zu reinigen sind.

Diese Aufgabe wird durch die im Kennzeichen des Anspruchs 1 angeführten Merkmale gelöst.

Durch die Trennung des Verschlusskolbens von dem Brühmodul wird erreicht, dass das Brühmodul sehr kompakt und einfach aufgebaut werden kann. Ausserdem kann durch die vorgeschlagenen Ausgestaltung auf eine auftrennbare Kupplung zum Zuführen des Brühwassers verzichtet werden.

Bevorzugte Ausführungsbeispiele der Erfindung sind in den abhängigen Ansprüchen 2 bis 19 umschrieben

So wird in einem bevorzugten Ausführungsbeispiel vorgeschlagen, dass der Verschlusskolben am Heisswasserbereiter angeformt oder direkt an diesem befestigt ist. Duch eine solche Ausgestaltung kann die Kaffeemaschine noch kompakter aufgebaut werden und die Verbindungsleitung zwischen Heisswasserbereiter und Verschlusskolben kann wegfallen. Ausserdem wird die Qualität des Kaffeegetränks gesteigert, wie anschliessend noch näher erläutert wird.

Bei einem weiteren, bevorzugten Ausführungsbeispiel wird vorgeschlagen, den Brühzylinder und den Brühkolben längsbeweglich jedoch schwenkfest anzuordnen. Durch den Verzicht auf einen Schwenkmechanismus, mittels welchem der Brühzylinder von der Füll- in die Brühstellung verschwenkt wird, kann der Aufbau des Brühmoduls sehr einfach und kompakt gehalten werden.

Nachfolgend wird ein bevorzugtes Ausführungsbeispiel der Kaffeemaschine anhand von Zeichnungen näher erläutert. In diesen Zeichnungen zeigt:
Fig. 1 eine Seitenansicht eines Heisswasserbereiters und eines Brühmoduls in der Grundstellung und in teilweise geschnittener Darstellung;
Fig. 2 den Heisswasserbereiter und das Brühmodul gemäss Fig. 1 in der Füllstellung; Fig. 3 den Heisswasserbereiters und das Brühmodul gemäss Fig. 1 in Brühstellung;

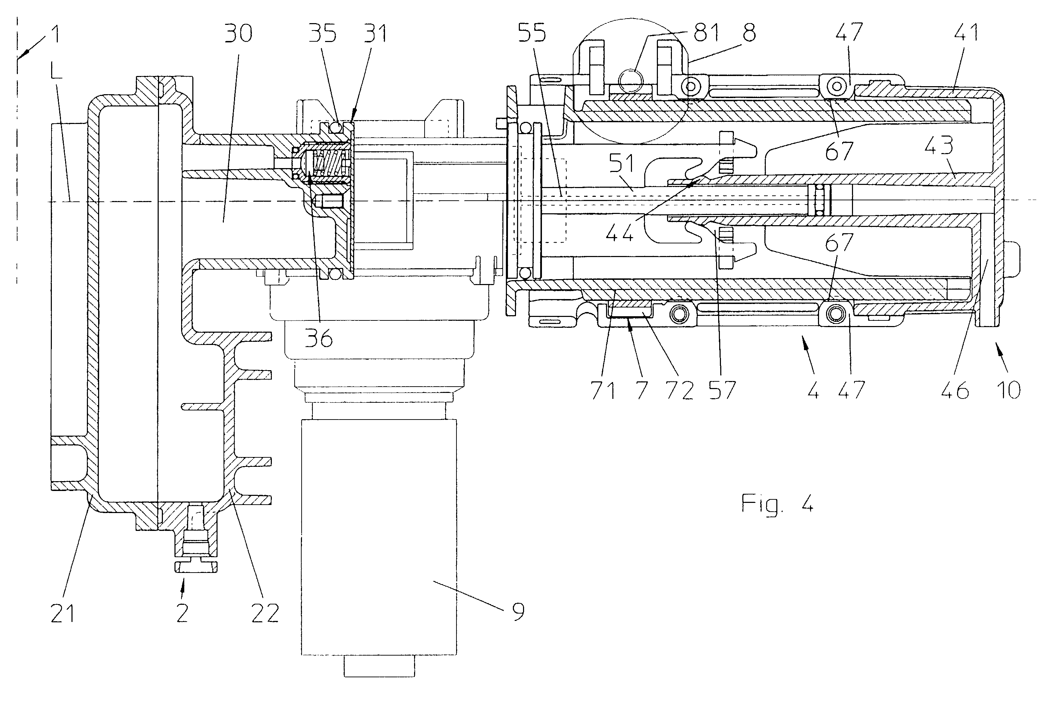

Fig. 4 den Heisswasserbereiters und das Brühmodul gemäss Fig. 1 in der Ausstosstellung;
Fig. 5 eine Draufsicht auf den Heisswasserbereiter, und
Fig. 6 eine Detailansicht des Verschlusskolbens.

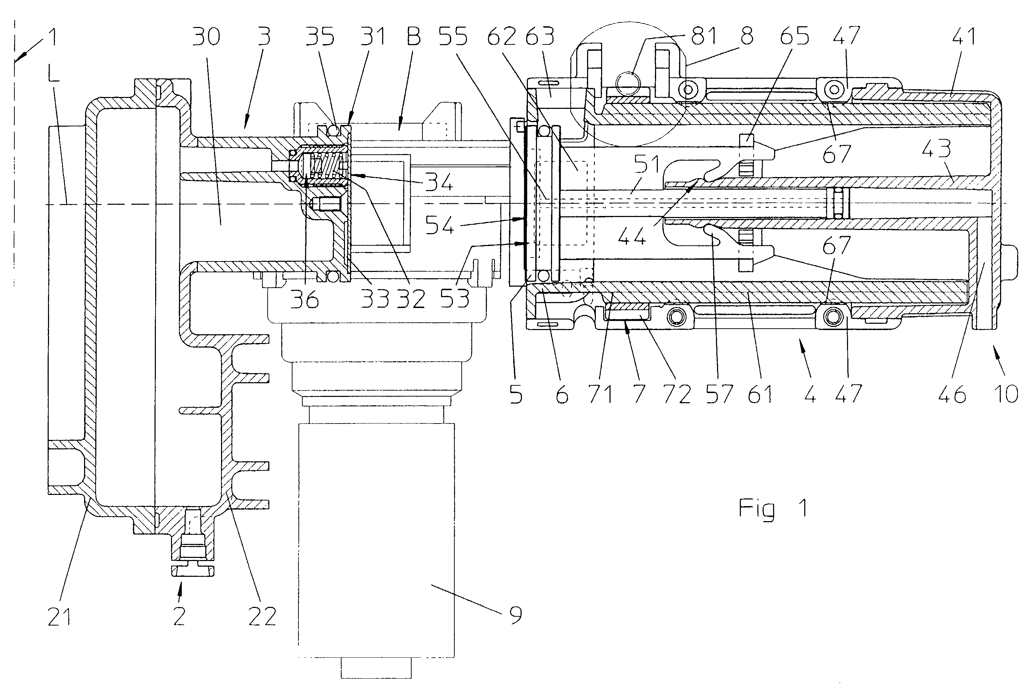

Anhand der Figur 1 wird der prinzipielle Aufbau der Kaffeemaschine näher erläutert, wobei aus dieser Darstellung nur die im Zusammenhang mit der Erfindung wesentlichen Teile der Kaffeemaschine hervorgehen. Nebst dem andeutungsweise eingezeichneten Gehäuse 1 sind aus dieser Darstellung ein Heisswasserbereiter in Form eines Boilers 2, ein Verschlusskolben 3, ein Brühmodul 4, ein Antriebsmotor 8, ein Mahlwerk 9, ein Getränkeauslass 10 sowie eine Pumpe 11 ersichtlich.

Nebst einem Gehäuse 41 weist das Brühmodul 4 im wesentlichen einen Brühkolben 5, einen Brühzylinder 6 sowie ein Betätigungsglied 7 auf. Der Brühzylinder 6 ist im wesentlichen hohlzylindrisch ausgebildet und am Umfang mit einem Aussengewinde 61 versehen. Der Brühkolben 5 ist längsbeweglich im Brühzylinder 6 aufgenommen. Das in achsialer Richtung fixierte Betätigungsglied 7 ist drehbar und konzentrisch zum Brühzylinder angeordnet und mit einem Innengewinde 71 versehen, das in das Aussengewinde 61 des Brühzylinders 6 eingreift. Um ein Verdrehen des Brühzylinders 6 um seine Längsachse zu verhindern, ist das Gehäuse 41 des Brühmoduls 4 mit Führungsmitteln 47 versehen, welche in korrespondierende auf der Aussenseite des Brühzylinders 6 angeordnete Ausnehmungen 67 eingreifen.

Auf der Aussenseite ist das Betätigungsglied 7 mit Zähnen 72 in Form eines Zahnrads versehen. Der Antriebsmotors 8 ist seitlich des Brühmoduls 6 angeordnet und weist ein Antriebsglied 81 in Form einer Schnecke auf, welches mit den Zähnen 72 des Betätigungsglieds 7 in Eingriff steht, wenn sich der Antriebsmotor 8 in der hier gezeigten Wirkstellung befindet. Damit der Antriebsmotor 8 von der Wirk- in eine Ruhestellung bewegt werden kann, ist dieser schwenkbar aufgehängt. Dies ist insofern wichtig, da der Antriebsmotor 8 vor dem Herausnehmen des Brühmoduls 4 in die Ruhestellung verschwenkt werden muss, damit dessen Antriebsglied 81 nicht mehr im Eingriff mit den Zähnen des Betätigungsglieds 7 steht. Vorzugsweise sind zwischen der Brüheinheit 4 und dem Antriebsmotor 8 wirkende Mittel vorgesehen, um den Antriebsmotor 8 beim Einsetzen des Brühmoduls 4 von der Ruhe- in die Wirkstellung zu Verschwenken, in welcher das Antriebsglied 81 des Antriebsmotors 8 in die Zähne 72 des Betätigungsglieds 7 eingreift. Solche Mittel sind zugunsten einer übersichtlichen Darstellung jedoch nicht eingezeichnet.

Auf der Vorderseite ist der Brühzylinder 6 mit zwei radial verlaufenden Öffnungen 62, 63 versehen, über welche dem Brühzylinder 6 gemahlener Kaffee zudosiert werden kann. Durch zwei Öffnung 62, 63 wird ermöglicht, dass zwei unterschiedliche Kaffeesorten sequentiell zudosiert werden können. Über die eine Öffnung 63 kann dem Brühzylinder 6 vom Mahlwerk 9 direkt Kaffeepulver zudosiert werden, wenn sich der Brühzylinder 6 in der nachfolgend noch näher erläuterten Füllstellung befindet. Die zweite Öffnung 62 ist dazu vorgesehen, dem Brühzylinder alternativ über eine im Gehäuse der Kaffeemaschine angeordnete Zuführöffnung eine weitere Kaffeesorte zuzuführen. Da nur ein Mahlwerk 9 vorgesehen ist, muss der zweiten Zuführöffnung 62 bereits gemahlener Kaffee zugeführt werden. Eine weitere Möglichkeit besteht darin, dass zwei Mahlwerke und zwei korrespondierende Öffnungen im Brühzylinder vorgesehen werden, so dass zwei unterschiedliche Kaffeegetränke aus frisch gemahlenem Kaffee zubereitet werden können. Schliesslich kann der Brühzylinder auch mit drei radialen Öffnungen versehen werden, wovon zwei von je einem Mahlwerk beschickt werden, währenddem die dritte Öffnung wiederum mit einer im Gehäuse der Kaffeemaschine angeordneten Zuführöffnung in Verbindung steht.

Das Gehäuse 41 des Brühmoduls 4 weist auf der Innenseite einen rohrförmigen Ansatz 43 auf, der am vorderen Ende auf der Aussenseite mit einer Einkerbung 44 versehen ist. Am hinteren Ende ist der rohrförmige Ansatz 43 mit einem abgebogenen Auslass 46 versehen, über den das Kaffeegetränk in den Getränkeauslass 10 fliessen kann.

Der im Brühzylinder 6 aufgenommene Brühkolben 5 ist auf der Rückseite mit einer rohrförmigen Kolbenstange 51 versehen, über welche das aufgebrühte Kaffeegetränk aus der Brühkammer ausströmen kann. Damit das aufgebrühte Kaffeegetränk von der Vorderseite des Brühkolbens 5 auf dessen Rückseite gelangen kann, weist der Brühkolben 5 auf seiner Vorderseite eine Vertiefung 53 auf die von einer Siebplatte 54 abgedeckt ist. Die Vertiefung 53 ist über einen Kanal 55 mit der rohrförmigen Kolbenstange 51 verbunden. Zudem weist der Brühkolben 5 auf seiner Rückseite Rastnocken 57 auf, welche in der in der Fig. 1 dargestellten Ausgangsstellung der Kaffeemaschine in der Einkerbung 44 des rohrförmigen Ansatzes 43 eingerastet sind. Im weiteren weist der Brühzylinder 6 auf der Innenseite Mitnehmer 65 zum kraftschlüssigen Mitnehmen des Brühkolbens 5 auf. Die Funktion der vorgängig angeführten Elemente wird anschliessend noch näher erläutert.

Der als Boiler ausgebildete Heisswasserbereiter 2 besteht aus zwei Halbschalen 21, 22 wovon an der einen 22 direkt der Verschlusskolben 3 angeformt ist. Der Verschlusskolben 3 ist im wesentlichen hohl ausgebildet und steht mit dem Innenraum des Heisswasserbereiters 2 in Verbindung. Dadurch wird der Verschlusskolben 3 vom erhitzten Brühwasser geflutet und homogen erhitzt. Der Vorderteil des Verschlusskolbens 3 besteht aus einem Kunststoffaufsatz 31. Dieser Kunststoffaufsatz 31 ist mit einer hohlzylindrisch ausgebildeten Kammer 32 versehen, in der ein Ventil 36 aufgenommen ist. Das Ventil 36 übernimmt zwei Funktionen: Einerseits wirkt es als Überdruckventil, welches bei einem vorbestimmten Überdruck im Boiler 3 öffnet; andererseits wirkt es als Rückschlagventil, welches ein Zurückfliessen von Brühwasser aus der Brühkammer in den Boiler 3 verhindert wird. Auf der der Brühkammer zugewandten Vorderseite weist der Kunststoffaufsatz 31 eine mit der hohlzylindrisch ausgebildeten Kammer 32, bzw. dem Auslass des Ventils 36 in Verbindung stehende Vertiefung 33 auf, die mit einer Siebplatte 34 abgedeckt ist. Durch die Vertiefung 34 und die Siebplatte 33 wird eine gleichmässige Verteilung des Brühwassers bezüglich des Querschnitts der Brühkammer bzw. des Brühzylinders 6 gewährleistet. Auf der Vorderseite ist der Verschlusskolben 3 zudem mit einem Dichtring 35 versehen.

Wie aus dieser Darstellung ersichtlich ist, sind sowohl das Brühmodul 4 wie auch der Verschlusskolben 3 horizontal in die Kaffeemaschine angeordnet bzw. die Längsachsen verlaufen horizontal. Diese Anordnung hat insbesondere beim Entfernen des ausgelaugten Kaffeekuchens einen Vorteil, wie anschliessend noch erläutert wird.

Natürlich kann das Brühmodul mitsamt dem Verschlusskolben auch vertikal in der Kaffeemaschine angeordnet werden. In diesem Fall wird der Heisswasserbereiter oberhalb des Brühzylinders angeordnet, so dass die Brühkammer vom Brühwasser von oben nach unten durchströmt wird. Ausserdem kann auch auf die radialen Öffnungen im Brühzylinder verzichtet werden, da die Zufuhr des Kaffeepulvers über seitlich schräg vom Brühzylinder angeordnete Mittel erfolgen kann.

Das Brühmodul 4 ist mittels eines nicht näher dargestellten Verschlusses, beispielsweise einem Bajonettverschluss, lösbar in die Kaffeemaschine eingesetzt.

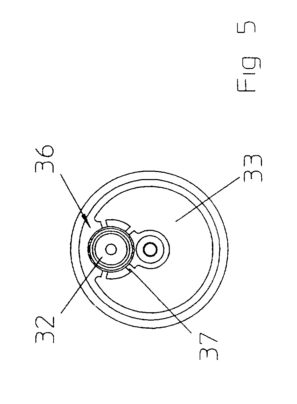

Fig. 5 zeigt den Verschlusskolben 3 in einer Draufsicht. Aus dieser Darstellung sind nebst dem Ventil 36 und der Vertiefung 33 Kanäle 37 ersichtlich, welche das Ventil 36 bzw. die Kammer 37 mit der Vertiefung 33 verbinden.

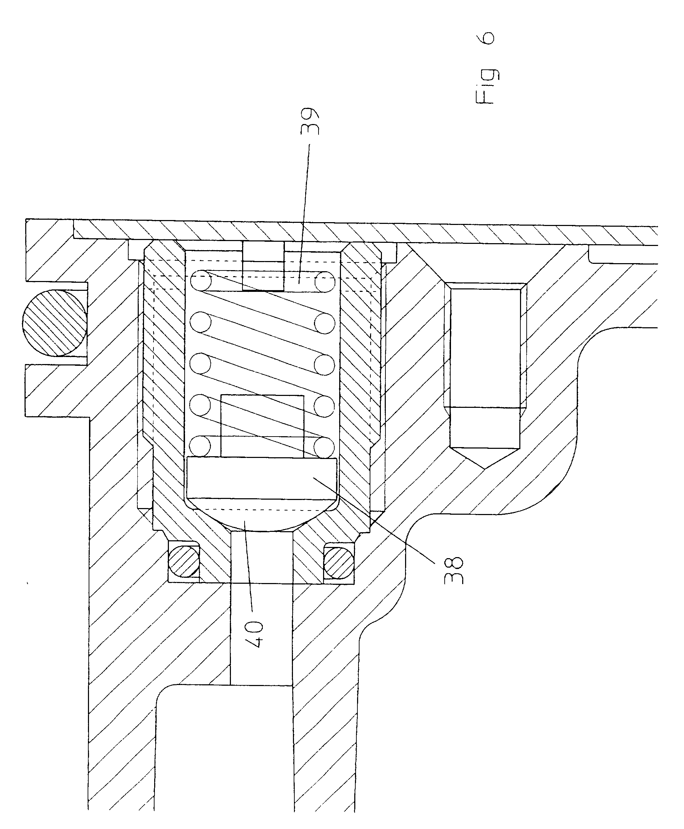

Fig. 6 zeigt eine Detailansicht des Verschlusskolbens 33. Das Ventil 36 besteht aus einem Ventilkörper 38 der von einer Feder 39 vorgespannt ist. Die Dichtfläche des Ventilkörpers 38 ist dabei als Kugelabschnitt ausgebildet. Sobald ein vorbestimmter Überdruck im Boiler erreicht ist, wird der Ventilkörper 38 entgegen der Vorspannkraft der Feder 39 verschoben. Ausserdem wird durch den Ventilkörper 38 verhindert, dass Brühwasser aus der Brühkammer in den Boiler 3 zurückfliesst.

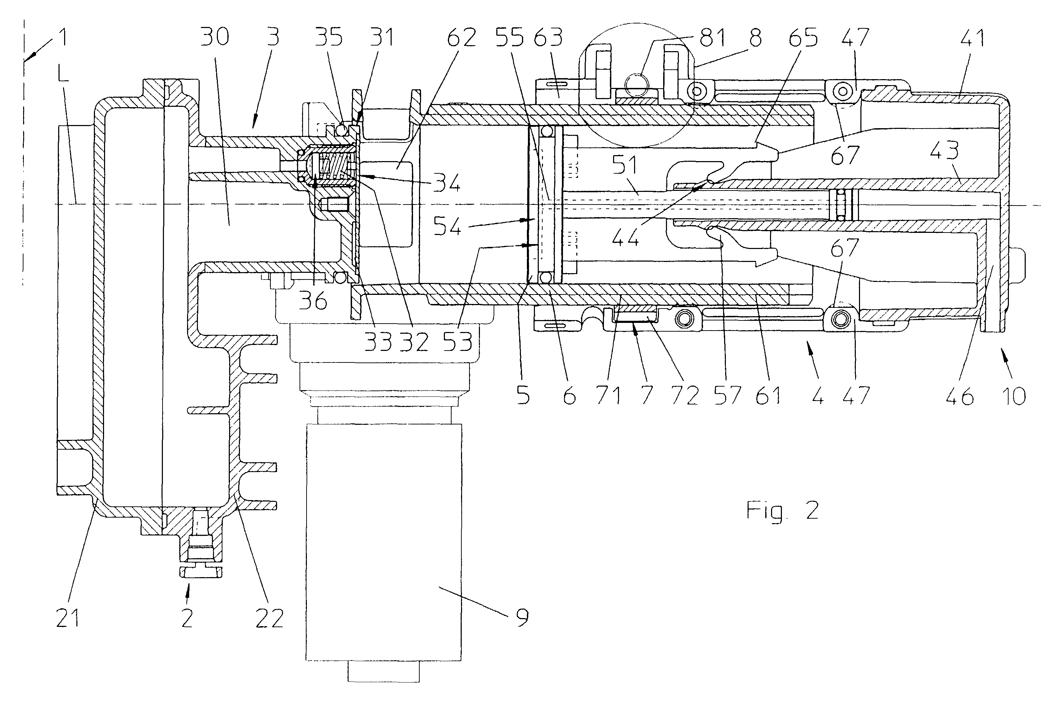

Die Funktionsweise dieser Kaffeemaschine stellt sich wie folgt dar: Aus der in der Fig. 1 dargestellten Ausgangsposition wird der Brühzylinder in die in Fig. 2 dargestellte Füllstellung gefahren, in der der Verschlusskolben 3 den Brühzylinder 6 endseitig abschliesst. Das Verschieben des Brühzylinders 6 erfolgt mittels des Antriebsmotors 8. Dabei wird über das Antriebsglied 81 des Antriebsmotors 8 das Betätigungsglied 7 gedreht, so dass letzeres mittels seines in das Aussengewinde 61 des Brühzylinders 6 eingreifenden Innengewindes 71 den Brühzylinder 6 verschiebt. Beim Vorschieben des Brühzylinders 6 verharrt der Brühkolben 5 zuerst in der Ausgangsstellung, da dessen Rastnocken 57 in der Einkerbung 44 des rohrförmigen Ansatzes 43 eingerastet sind. Sobald sich der vordere Rand des Brühzylinders 6 über den Verschlusskolben 3 geschoben hat, wird dem Brühzylinder 6 vom Mahlwerk 9 frisch gemahlenes Kaffeepulver über die eine Öffnung 62 zudosiert. Danach wird der Brühzylinder 6 weiter verschoben, wobei der Brühkolben 5 vom Brühzylinder 6 nunmehr mitgenommen wird, da sich die Mitnehmer 65 an der Rückseite des Brühkolbens 5 anlegen. Durch den sich in Richtung des Verschlusskolbens 3 bewegenden Brühkolben 5 wird das im Brühzylinder 6 aufgenommene Kaffeepulver verdichtet. Beim Vorschieben des Brühzylinders 6 legt sich auch der Dichtring 35 des Verschlusskolbens 3 an der Innenseite des Brühzylinders 6 an, so dass durch den Brühzylinder 6 und die beiden Kolben 3, 5 nunmehr eine abgeschlossene Brühkammer B gebildet wird. Die Vorwärtsbewegung des Brühzylinders 6 zusammen mit dem Brühkolben 5 wird gestoppt, sobald das Kaffeepulver einen vorbestimmten Verdichtungsgrad aufweist, d.h mit einer bestimmten Kraft verdichtet wird. Das Stoppen der Vorwärtsbewegung des Brühzylinders 6 kann beispielsweise durch eine Drehmomentüberwachung des Antriebsmotors 8 erreicht werden. Nachdem die Vorwärtsbewegung des Brühzylinders 6 gestoppt ist, befindet sich das Brühmodul 4 in der Brühstellung.

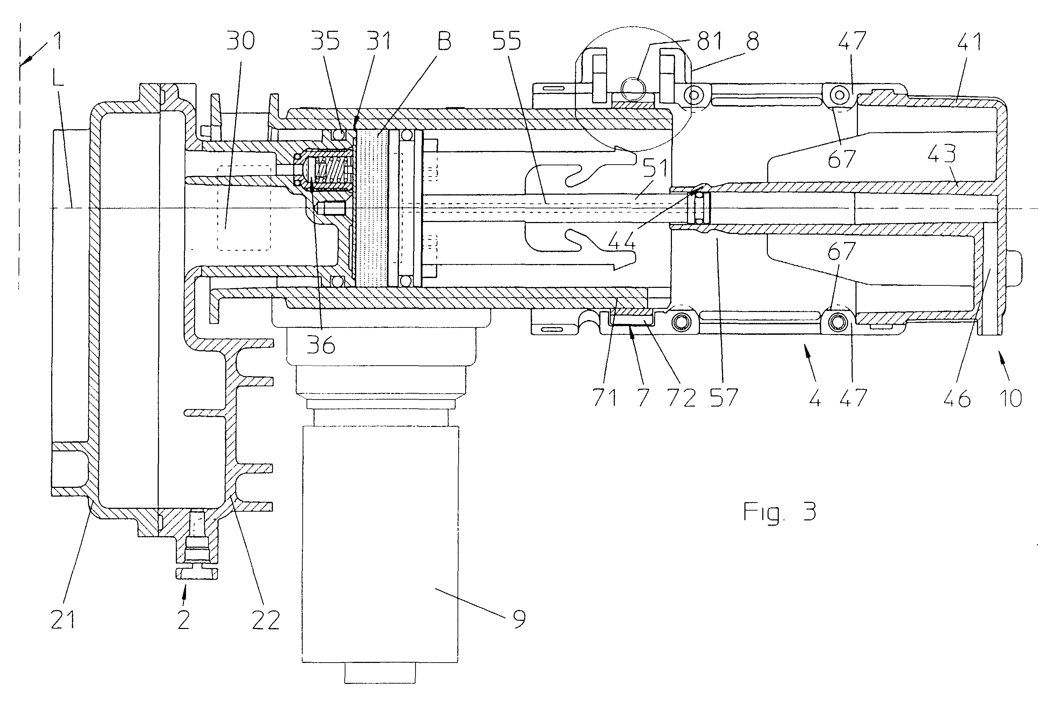

Die Brühstellung ist aus der Fig. 3 ersichtlich. Um das verdichtete Kaffeepulver aufzubrühen, wird nun die aus dieser Darstellung nicht ersichtliche Pumpe 11 in Betrieb gesetzt. Dadurch wird ein Überdruck im Boiler 2 aufgebaut und das Brühwasser kann vom Boiler 2 über das Ventil 36 auf die Rückseite der Siebplatte 33 und von da über letztere in die Brühkammer B strömen wo das darin aufgenommene Kaffeepulver aufgebrüht wird. Auf der anderen Seite der Brühkammer B kann das nunmehr als Kaffegetränk bezeichnete Brühwasser über die im Brühkolben 5 angeordnete Siebplatte 54 durch den Brühkolben 5 hindurchtreten und über die hohl ausgebildete Kolbenstange 51, den rohrförmigen Ansatz 43 und den abgebogenen Auslass 46 schliesslich in den Getränkeauslass 10 fliessen.

Nach dem Aufbrühen des Kaffegetränks wird der Brühzylinder 6 in die Gegenrichtung bewegt, indem die Drehrichtung des Antriebsmotors geändert wird. Dabei wird der Brühkolben 5 vom Brühzylinder 6 mitgenommen, da die Reibung zwischen dem Dichtring 52 des Brühkolbens 5 und dem Brühzylinder 6 ausreicht den Brühkolben 5 mitzunehmen. An einem bestimmten Punkt bei der Rückwärtsbewegung des Brühzylinders 6 und des Brühkolbens 5 rasten die Rastnocken 57 des Brühkolbens 5 in der Einkerbung des rohrförmigen Ansatzes 43 ein, so dass der Brühkolben 5 in seiner Endstellung fixiert ist. Zusätzlich zu den Rastmitteln, 44, 57 kann auch noch ein hinterer Anschlag vorgesehen werden, damit der Brühkolben 5 sicher in seiner Endstellung verharrt. Der Brühzylinder 6 wird jedoch weiter verschoben, wourch eine Relativbewegung zwischen dem Brühzylinder 6 und dem Brühkolben 5 entsteht bis schliesslich der Brühkolben 5 bündig mit der Vorderseite des Brühylinders 6 abschliesst. Der ausgelaugte Kaffeekuchen fällt nun durch das Eigengewicht nach unten in eine nicht eingezeichnete Auffangschale. Um das sichere Entfernen des ausgelaugten Kaffeekuchens zu unterstützen, kann zusätzlich ein nicht näher eingezeichneter Abstreifer vorgesehen werden. Das Brühmodul 4 befindet sich nunmehr wieder in seiner Ausgangsstellung, in welcher es aus dem Gehäuse 1 herausgenommen werden kann. Das aus dem Gehäuse 1 herausgenommene Brühmodul 4 kann sehr einfach gereinigt werden, indem es beispielsweise unter fliessendes Wasser gehalten wird.

Das Reinigen des in der Kafeemaschine verbleibenden Verschlusskolbens kann beispielsweise von aussen mit einem Pinsel erfolgen. Eine andere Möglichkeit besteht darin, ein Spülprogramm vorzusehen, bei welchem der Verschlusskolben von Heisswasser durchströmt wird ohne dass das Brühmodul in die Kaffeemaschine eingesetzt ist, oder, bei eingesetztem Brühmodul, ohne dass im Brühzylinder Karfeepulver aufgenommen ist. Da der Verschlusskolben nicht mit dem aufgebrühten Kaffeegetränk in Berührung kommt, genügt eine solche Reinigung im Normalfall.

Durch das vorgängig erläuterte Brühmodul und den fest in der Kaffeemaschine eingebauten Verschlusskolben, kann die Kaffeemaschine sehr kompakt aufgebaut werden. Ausserdem ist das Brühmodul aus einer vergleichsweise geringen Anzahl Elementen aufgebaut, was eine hohe Zuverlässigkeit sicherstellt und ausserdem ein kostengünstige Fertigung erlaubt. Dadurch, dass der Brühzylinder 6 und der Brühkolben 5 längsbeweglich jedoch schwenkfest ausgebildet sind, kann auf einen Schwenkmechanismus zum Verschwenken des Brühzylinders von einer Füll- in eine Brühstellung verzichtet werden, was sich wiederum positiv auf die Fertigungskosten und die Anzahl Bauelemente auswirkt. Trotz der schwenkfesten Anordnung des Brühmoduls 4, kann dem mit radialen Öffnungen versehenen Brühzylinder 6 das Kaffeepulver auf einfache Weise zudosiert werden und zudem können unterschiedliche Kaffeesorten zur Zubereitung eines Kaffeegetränks verwendet werden.

Durch den am Heisswasserbereiter 2 angeformten Verschlusskolben 3 kann ausserdem die bisher notwendige Verbindungsleitung zwischen dem Heisswasserbereiter 2 und dem Verschlusskolben 3 mitsamt den zugehörigen Kupplungen wegfallen. Ausserdem wird der Verschlusskolben 3 durch den Heisswasserbereiter 2 erwärmt. All dies trägt dazu bei, dass die Temperatur des Brühwassers beim Eintritt in die Brühkammer jeweils eine konstante, vorbestimmte Temperatur aufweist und das Karfeepulver vom Brühwasser immer mit der optimalen Temperatur durchströmt werden kann.

## Patentansprüche

1. Kaffeemaschine mit einem Heisswasserbereiter (2) zum Erhitzen des Brühwassers, einem eine Brühkammer (B) begrenzenden Brühzylinder (6), einem Verschlusskolben (3) zum endseitigen Verschliessen des Brühzylinders (6) sowie einem beweglich im Brühzylinder (6) angeordneten Brühkolben (5) zum Verdichten des Kaffeepulvers und/oder zum Ausstossen des ausgelaugten Kaffeekuchens, **dadurch gekennzeichnet, dass** der Verschlusskolben (3) fest mit der Kaffemaschine verbunden ist und dass **ein vom Verschlusskolben (3) trennbares,** lösbar in die Kaffeemaschine eingesetztes Brühmodul (4) vorgesehen ist, welches zumindest den Brühzylinder (6) und den Brühkolben (5) umfasst.

2. Kaffeemaschine nach Anspruch 1, **dadurch gekennzeichnet, dass** der Verschlusskolben (2) am Heisswasserbereiter (2) angeformt oder direkt an diesem befestigt ist.

3. Kaffeemaschine nach Anspruch 1 oder 2, **dadurch gekennzeichnet, dass** die Längsachse des in die Kaffeemaschine eingesetzten Brühmoduls (4) im wesentlichen vertikal verläuft.

4. Kaffeemaschine nach einem der vorhergehenden Ansprüche, **dadurch gekennzeichnet, dass** die Längsachse des in die Kaffeemaschine eingesetzten Brühmoduls (4) im wesentlichen horizontal verläuft.

5. Kaffeemaschine nach einem der vorhergehenden Ansprüche, **dadurch gekennzeichnet, dass** der Brühzylinder (6) und der Brühkolben (5) längsbeweglich jedoch schwenkfest angeordnet sind.

6. Kaffeemaschine nach Anspruch 4 oder 5, **dadurch gekennzeichnet, dass** der Brühzylinder (6) mit zumindest einer radialen Öffnung (62, 63) zum Zuführen von Kaffeepulver versehen ist.

7. Kaffeemaschine nach Anspruch 6, **dadurch gekennzeichnet, dass** der Brühzylinder (6) mit zumindest zwei radialen Öffnungen (62, 63) zum Zuführen von Kaffeepulver versehen ist und dass zwei Mahlwerke zum Mahlen von Kaffeebohnen vorgesehen sind, wovon je eines einer Öffnung (62, 63) zugeordnet ist.

8. Kaffeemaschine nach Anspruch 6 oder 7, **dadurch gekennzeichnet, dass** der Brühzylinder (6) mit zumindest zwei radialen Öffnungen (62, 63) versehen ist, und dass eine mit der einen Öffnung in Verbindung stehende Einfüllöffnung zum Einfüllen von Kaffeepulver vorgesehen ist.

9. Kaffeemaschine nach einem der vorhergehenden Ansprüche, **dadurch gekennzeichnet, dass** ein Spindelantrieb zum Bewegen des Brühzylinders (6) vorgesehen ist.

10. Kaffeemaschine nach Anspruch 9, **dadurch gekennzeichnet, dass** der Brühzylinder (6) mit einem Aussengewinde (61) versehen ist und dass das Brühmodul (4) ein konzentrisch zum Brühzylinder (6) angeordnetes, drehbares Betätigungsglied (7) aufweist, welches auf der Innenseite mit einem Gewinde (71) versehen ist, das mit dem Aussengewinde (61) des Brühzylinders (6) im Eingriff ist, wobei das Betätigungsglied (7) auf der Aussenseite als Zahnrad (72) ausgebildet ist und die Zähne des Zahnrads (72) mit einem Antriebsglied (81) eines für die Bewegung des Brühzylinders (6) vorgesehenen Antriebsmotors (8) in Eingriff bringbar sind.

11. Kaffeemaschine nach Anspruch 9 oder 10, **dadurch gekennzeichnet, dass** der Antriebsmotor (8) seitlich des Brühmoduls (6) angeordnet ist.

12. Kaffeemaschine nach einem der Ansprüche 9 bis 11, **dadurch gekennzeichnet, dass** der Antriebsmotor (8) oder zumindest die kraftübertragenden Teile des Antriebsmotors schwenkbar gelagert ist/sind, und dass zwischen der Brüheinheit (4) und dem Antriebsmotor (8) bzw. den kraftübertragenden Teilen des Antriebsmotors wirkende Mittel vorgesehen sind, um den Antriebsmotor (8) bzw. die kraftübertragenden Teile des Antriebsmotors beim Einsetzen des Brühmoduls (4) in die Kaffeemaschine von der Ruhe- in die Wirkstellung zu Verschwenken, in welcher das Antriebsglied (81) des Antriebsmotors (8) in die Zähne (72) des Betätigungsglieds (7) eingreift.

13. Kaffeemaschine nach einem der vorhergehenden Ansprüche, **dadurch gekennzeichnet, dass** der Brühkolben (5) mit einer hohlen Kolbenstange (51) versehen ist, welche als Brühkammerauslass für das aufgebrühte Kaffeegetränk ausgebildet ist.

14. Kaffeemaschine nach Anspruch 13, **dadurch gekennzeichnet, dass** das Brühmodul (4) mit einem in den Brühzylinder (6) ragenden, rohrförmigen Ansatz (43) versehen ist, in welchen die Kolbenstange (51) zumindest teilweise eingetaucht ist und dass der der rohrförmige Ansatz (43) mit einem Getränkeauslass (10) der Kaffeemaschine verbunden ist..

15. Kaffeemaschine nach einem der vorhergehenden Ansprüche, **dadurch gekennzeichnet, dass** Rastmittel (44, 57) vorgesehen sind, um den Brühkolben (5) in seiner Ausgangsstellung zu Fixieren.

16. Kaffeemaschine nach Anspruch 15, **dadurch gekennzeichnet, dass** der rohrförmige Ansatz (43) mit einer Einkerbung (44) versehen ist und dass die Rastmittel (57) in der Ausgangsstellung des Brühkolbens (5) in die Einkerbung (44) eingreifen.

17. Kaffeemaschine nach einem der vorhergehenden Ansprüche, **dadurch gekennzeichnet, dass** der Brühzylinder (6) auf der Innenseite mit Mitnehmern (65) zum Bewegen des Brühkolbens (5) versehen ist.

18. Kaffeemaschine nach einem der vorhergehenden Ansprüche, **dadurch gekennzeichnet, dass** der Brühzylinder (6) mit Führungsmitteln (67) versehen ist, welche ein Verdrehen des Brühzylinders (6) um seine Längsachse verhindern.

19. Kaffeemaschine nach einem der vorhergehenden Ansprüche, **dadurch gekennzeichnet, dass** das Brühmodul (4) mit Verschlussmitteln versehen ist, mittels welchen das Brühmodul (4) in der Kaffeemaschine fixierbar und wieder lösbar ist.

## Claims

1. Coffee machine having a hot-water generator (2) for heating the brewing water, having a brewing cylinder (6) which bounds a brewing chamber (B), having a closure piston (3) for closing the brewing cylinder (6) at the end, and having a brewing piston (5) which is arranged in a moveable manner in the brewing cylinder (6) and is intended for compacting the coffee powder and/or for ejecting the used-up coffee mass, **characterized in that** the closure piston (3) is fixed to the coffee machine, and **in that** there is provided a brewing module (4) which can be separated from the closure piston (3), and which is inserted in a releasable manner into the coffee machine and comprises at least the brewing cylinder (6) and the brewing piston (5).

2. Coffee machine according to Claim 1, **characterized in that** the closure piston (3) is integrally formed on the hot-water generator (2) or fastened directly thereon.

3. Coffee machine according to Claim 1 or 2, **characterized in that** the longitudinal axis of the brewing module (4) inserted into the coffee machine runs essentially vertically.

4. Coffee machine according to one of the preceding claims, **characterized in that** the longitudinal axis of the brewing module (4) inserted into the coffee machine runs essentially horizontally.

5. Coffee machine according to one of the preceding claims, **characterized in that** the brewing cylinder (6) and the brewing piston (5) are arranged such that they can be moved longitudinally but cannot be pivoted.

6. Coffee machine according to Claim 4 or 5, **characterized in that** the brewing cylinder (6) is provided with at least one radial opening (62, 63) for feeding coffee powder.

7. Coffee machine according to Claim 6, **characterized in that** the brewing cylinder (6) is provided with at least two radial openings (62, 63) for feeding coffee powder, and **in that** two grinding units are provided for grinding coffee beans, one each being assigned to an opening (62, 63).

8. Coffee machine according to Claim 6 or 7, **characterized in that** the brewing cylinder (6) is provided with at least two radial openings (62, 63), and **in that** an introduction opening connected to one opening is provided for the introduction of coffee powder.

9. Coffee machine according to one of the preceding claims, **characterized in that** a spindle drive is provided for moving the brewing cylinder (6).

10. Coffee machine according to Claim 9, **characterized in that** the brewing cylinder (6) is provided with an external thread (61), and **in that** the brewing module (4) has a rotatable actuating element (7) which is arranged concentrically in relation to the brewing cylinder (6) and is provided, on the inside, with a thread (71) which engages with the external thread (61) of the brewing cylinder (6), the actuating element (7) being designed, on the outside, as a gearwheel (72) and it being possible for the teeth of the gearwheel (72) to be brought into engagement with a drive element (81) of a drive motor (8) provided for moving the brewing cylinder (6).

11. Coffee machine according to Claim 9 or 10, **characterized in that** the drive motor (8) is arranged to the side of the brewing module (6).

12. Coffee machine according to one of Claims 9 to 11, **characterized in that** the drive motor (8) or at least the force-transmitting parts of the drive motor is/are mounted in a pivotable manner, and **in that** means which act between the brewing unit (4) and the drive motor (8) or the force-transmitting parts of the drive motor are provided in order, when the brewing module (4) is inserted into the coffee machine, to pivot the drive motor (8) or the force-transmitting parts of the drive motor from the rest position into the active position, in which the drive element (81) of the drive motor (8) engages in the teeth (72) of the actuating element (7).

13. Coffee machine according to one of the preceding claims, **characterized in that** the brewing piston (5) is provided with a hollow piston rod (51) which is designed as a brewing-chamber outlet for the brewed coffee drink.

14. Coffee machine according to Claim 13, **characterized in that** the brewing module (4) is provided with a tubular extension (43) which projects into the brewing cylinder (6) and into which the piston rod (51) has penetrated at least in part, and **in that** the tubular extension (43) is connected to a drink outlet (10) of the coffee machine.

15. Coffee machine according to one of the preceding claims, **characterized in that** latching means (44, 57) are provided in order to fix the brewing piston (5) in its starting position.

16. Coffee machine according to Claim 15, **characterized in that** the tubular extension (43) is provided with a notch (44), and **in that** the latching means (57) engage in the notch (44) in the starting position of the brewing piston (5).

17. Coffee machine according to one of the preceding claims, **characterized in that** the brewing cylinder (6) is provided, on the inside, with carrying-along elements (65) for moving the brewing piston (5).

18. Coffee machine according to one of the preceding claims, **characterized in that** the brewing cylinder (6) is provided with guide means (67) which prevent the brewing cylinder (6) from rotating about its longitudinal axis.

19. Coffee machine according to one of the preceding claims, **characterized in that** the brewing module (4) is provided with closure means by which the brewing module (4) can be fixed in the coffee machine and released again.

## Revendications

1. Machine à café comprenant un préparateur d'eau chaude (2) servant à chauffer l'eau de percolation, un cylindre de percolation (6) délimitant une chambre de percolation (B), un piston de fermeture (3) servant à fermer du côté de l'extrémité le cylindre de percolation (6) et un piston de percolation (5) disposé d'une manière mobile dans le cylindre de percolation (6) et servant à compacter la poudre de café et/ou expulser le gâteau de café dont la boisson a été extraite, **caractérisée en ce que** le piston de fermeture (3) est solidaire à demeure de la machine à café et **en ce qu'**il est prévu un module de percolation (4) qui est séparable du piston de fermeture (3) et peut être monté d'une manière amovible dans la machine à café et qui comprend au moins le cylindre de percolation (6) et le piston de percolation (5).

2. Machine à café suivant la revendication 1, **caractérisée en ce que** le piston de fermeture (3) est réalisé au formage sur le préparateur d'au chaude (2) ou est fixé directement sur celui-ci.

3. Machine à café suivant la revendication 1 ou 2, **caractérisée en ce que** l'axe longitudinal du module de percolation (4) monté dans la machine à café s'étend d'une manière essentiellement verticale.

4. Machine à café suivant l'une des revendications précédentes, **caractérisée en ce que** l'axe longitudinal du module de percolation (4) monté dans la machine à café s'étend d'une manière essentiellement horizontale.

5. Machine à café suivant l'une des revendications précédentes, **caractérisée en ce que** le cylindre de percolation (6) et le piston de percolation (5) sont disposés de façon à être mobiles dans le sens de la longueur, mais sont fixes en rotation.

6. Machine à café suivant la revendication 4 ou 5, **caractérisée en ce que** le cylindre de percolation (6) est pourvu d'au moins une ouverture radiale (62, 63) pour l'introduction de poudre de café.

7. Machine à café suivant la revendication 6, **caractérisée en ce que** le cylindre de percolation (6) est pourvu d'au moins deux ouvertures radiales (62, 63) pour l'introduction de poudre de café et **en ce qu'**il et prévu deux moulins servant à moudre des grains de café, chacun étant associé à une ouverture (62, 63) respective.

8. Machine à café suivant la revendication 6 ou 7, **caractérisée en ce que** le cylindre de percolation (6) est pourvu d'au moins deux ouvertures radiales (62, 63) et **en ce qu'**il est prévu une ouverture d'introduction de remplissage qui communique avec l'une des ouvertures et qui sert à l'introduction de remplissage de poudre de café.

9. Machine à café suivant l'une des revendications précédentes, **caractérisé en ce qu'**il est prévu un entraînement à tige filetée servant à déplacer le cylindre de percolation (6).

10. Machine à café suivant la revendication 9, **caractérisée en ce que** le cylindre de percolation (6) est pourvu d'un filetage extérieur (61) et **en ce que** le module de percolation (4) comporte un organe d'actionnement (7) rotatif qui est disposé d'une manière concentrique au cylindre de percolation (6) et qui est pourvu, sur la face intérieure, d'un filetage (71) qui engrène avec le filetage extérieur (61) du cylindre de percolation (6), tandis que, sur la face extérieure, l'organe d'actionnement (7) est réalisé sous forme d'une roue dentée (72) et les dents de la roue dentée (72) peuvent être amenées à engrener avec un organe d'entraînement (81) d'un moteur d'entraînement (8) prévu pour le déplacement du cylindre de percolation (6).

11. Machine à café suivant la revendication 9 ou 10, **caractérisée en ce que** le moteur d'entraînement (8) est disposé sur le côté vis-à-vis du module de percolation (6).

12. Machine à café suivant l'une des revendications 9 à 11, **caractérisée en ce que** le moteur d'entraînement (8) ou au moins les parties du moteur d'entraînement qui transmettent les forces est/sont montés d'une manière basculante et **en ce qu'**il est prévu des moyens agissant entre l'unité de percolation (4) et le moteur d'entraînement (8) ou les parties du moteur d'entraînement qui transmettent les forces, afin de faire basculer le moteur d'entraînement (8), ou les parties du moteur d'entraînement qui transmettent les forces, lors de la mise en place du module de percolation (4) dans la machine à café, de la position de repos à la position active dans laquelle l'organe d'entraînement (81) du moteur d'entraînement (8) engrène dans les dents (72) de l'organe d'actionnement (7).

13. Machine à café suivant l'une des revendications précédentes, **caractérisée en ce que** le piston de percolation (5) est pourvu d'une tige de piston (51) creuse qui est réalisée en tant que sortie de chambre de percolation pour la boisson de café obtenue par percolation.

14. Machine à café suivant la revendication 13, **caractérisée en ce que** le module de percolation (4) est pourvu d'un embout tubulaire (43) qui fait saillie dans le cylindre de percolation (6) et dans lequel la tige de piston (51) est enfoncée au moins partiellement et **en ce que** l'embout tubulaire (43) est relié à une sortie de boisson (10) de la machine à café.

15. Un machine à café suivant l'une des revendications précédentes, **caractérisée en ce qu'**il est prévu des moyens d'encliquetage (44, 57), afin d'immobiliser le piston de percolation (5) dans sa position finale.

16. Machine à café suivant la revendication 15, **caractérisée en ce que** l'embout tubulaire (43) est pourvu d'une partie entaillée (44) et **en ce que** les moyens d'encliquetage (57) s'emboîtent dans la partie entaillée (44) dans la position finale du piston de percolation (5).

17. Machine à café suivant l'une des revendications précédentes, **caractérisée en ce que** le cylindre de percolation (6) est pourvu, sur la face intérieure, d'éléments d'entraînement (65) servant à déplacer le piston de percolation (5).

18. Machine à café suivant l'une des revendications précédentes, **caractérisée en ce que** le cylindre de percolation (6) est pourvu de moyens de guidage (67) qui empêchent un décalage en rotation du cylindre de percolation (6) autour de son axe longitudinal.

19. Machine à café suivant l'une des revendications précédentes, **caractérisée en ce que** le module de percolation (4) est pourvu de moyens de fermeture au moyen desquels le module de percolation (4) peut être immobilisé dans la machine à café et être de nouveau séparable.
